# EUROPÄISCHE PATENTSCHRIFT

(11) **EP 1 265 489 B1**
(45) Veröffentlichungstag und Bekanntmachung des Hinweises auf die Patenterteilung: **12.10.2005**
(21) Anmeldenummer: 01931375.8
(22) Anmeldetag: 20.03.2001
(51) Int. Cl.: A23B 7/152

(54) **KLIMAREGELUNG FÜR DEN TRANSPORT UND DIE LAGERUNG VON VERDERBLICHEN GÜTERN**
CLIMATE CONTROL FOR THE TRANSPORT AND STORAGE OF PERISHABLES
REGULATION CLIMATIQUE POUR LE TRANSPORT ET LE STOCKAGE DE DENREES PERISSABLES

(30) Priorität: 20.03.2000 DE 10013501
(43) Veröffentlichungstag der Anmeldung: 18.12.2002
(73) Patentinhaber: Gäbler, Ralph, 53757 Sankt Augustin (DE)
(72) Erfinder: Gäbler, Ralph, 53757 Sankt Augustin (DE)
(74) Vertreter: Stute, Ivo Peter
(86) Internationale Anmeldenummer: PCT/DE2001/001064
(87) Internationale Veröffentlichungsnummer: WO 2001/071258

(56) Entgegenhaltungen:
- WO-A-86/01296
- WO-A-95/00030
- DE-A- 19 516 974
- US-A- 5 791 236

## Beschreibung

Die Erfindung betrifft ein Verfahren zur Regelung einer kontrollierten Atmosphäre für die Lagerung von Pflanzenprodukten in mindestens einem Lager- oder Transportraum.

Damit in jedem Land eine Vielzahl von Pflanzenprodukten wie Obst, Gemüse und Schnittblumen zu jeder Jahreszeit erhältlich sind, unabhängig davon, ob diese Produkte in der jeweiligen Jahreszeit oder überhaupt in diesem Land gedeihen, gibt es ein starkes Bestreben, geeignete Transport- und Lagerbedingungen für diese Produkte zu schaffen, so daß sie nach ihrer Ernte über einen langen Zeitraum gelagert werden und trotzdem als frische Produkte ohne Qualitätsverlust an den Endverbraucher verkauft werden können. Bei geeigneten Bedingungen kann zum einen der kostspielige Transport einzelner Containereinheiten per Flugzeug durch den wesentlich kostengünstigeren Massentransport auf einem Schiff ersetzt werden. Zum anderen wird man aufgrund längerer möglicher Lagerzeiten unabhängig von durch den Erntezyklus bedingte Angebotsschwankungen.

Das prinzipielle Problem der Lagerung von Pflanzenprodukten über einen längeren Zeitraum besteht darin, daß es sich dabei um lebende Organismen mit einem Stoffwechsel und einem Energiebedarf handelt, wobei der Stoffwechsel während der Lagerung aufrecht erhalten werden muß.

Durch gezielte Einflußnahme wie z.B. einer Erniedrigung der Temperatur, einer Steuerung der Luftfeuchtigkeit, einer erheblichen Erhöhung der CO₂ - Konzentration und einem Absenken der O₂ - Konzentration in der Atmosphäre des Lagerraums wird die Aktivität der am Atemstoffwechsel beteiligten Enzyme gesenkt und dadurch der Stoffwechsel der Früchte während der Lagerung verzögert. Ein weiterer Vorteil einer solchen kontrollierten Atmosphäre besteht darin, daß Fraßschädlinge innerhalb der Lagerräume vernichtet werden.

Bei Früchten unterscheidet man zwischen klimakterischen Früchten wie beispielsweise Bananen, Kiwis, Tomaten oder Äpfel und nicht klimakterischen Früchten wie beispielsweise Zitrusfrüchten. Sie unterscheiden sich unter anderem dadurch, daß sie unterschiedlich auf die Atmosphärenzusammensetzung reagieren und das Pflanzenhormon Ethylen eine unterschiedliche Rolle während ihres Reifeprozesses spielt.

Der Stoffwechsel von Pflanzenprodukten und Früchten kann durch eine Verringerung der O₂-Konzentration nicht beliebig gesenkt werden. Bei zu geringen Konzentrationen wird die für den Stoffwechsel benötigte Energie des Pflanzenprodukts durch eine Umstellung auf alkoholische Gärung aufgebracht, wodurch der entstehende Alkohol sich in der eingelagerten Ware akkumuliert und drastische Qualitätseinbußen entstehen.

Eine erhöhte CO₂-Konzentration während der Lagerung kann den normalen Stoffwechsel der Früchte in bezug auf die Lagerung positiv beeinflussen hinsichtlich der Glykolyse, der Fermentation, des Krebszyklus oder des Elektronentransports. Ihre Atmung verringert sich allerdings im Preklimakterium kaum, wohingegen eine signifikante Reduzierung bei klimakterischen Früchten im Klimakterium nachweisbar ist.
Demgegenüber kann es zum Beispiel bei Äpfeln aufgrund zu hoher CO₂-Konzentrationen in Kombination mit tiefen Lagertemperaturen zur Bildung von Schalenbräune kommen, wodurch die Äpfel unverkäuflich werden. Zwar kann die Ausprägung der Schalenbräune durch Zugabe von Antioxidantien verringert werden, eine solche Behandlung ist jedoch in Deutschland nicht zugelassen.
Auch können mit einer überhöhten CO₂-Konzentration eine erhöhte C₂H₄-Produktion, unregelmäßiges Reifen, unterdrückte oder erschwerte physiologische Prozesse und eine erhöhte Anfälligkeit für Verrotten einhergehen.

Ethylen ist ein Pflanzenhormon, welches in einer Vielzahl unterschiedlicher Wachstumsphasen und -vorgänge von Pflanzen und Früchten wie der Keimung, dem Triebwachstum, der Blütenbildung, dem Welken, der Fruchtreifung, der Seneszenz, etc. eine Schlüsselrolle spielt. Es wird von Pflanzen aber auch in Streßsituationen wie bei Wassermangel, Überflutung, Hitze, Kälte, Pilz- und Bakterienbefall und mechanische Verwundung produziert wird.

Der sogenannte Yang Cycle beschreibt die Biosynthese des Ethylens:
L-Methionin → S-Adenosyl-L-Methionin (AdoMet) → 1-Aminocyclopran-1-Carboxyl Säure (ACC) → Ethylen.
Die entscheidenden Enzyme zur Steuerung der Ethylenerzeugung sind die ACC Synthase, also die Umwandlung von AdoMet in ACC, und die ACC Oxidase, die Oxidation von ACC zu Ethylen.

Man macht sich den Einfluß von Ethylen auf den Reifeprozeß von klimakterischen Früchten zunutze. So kann der Reifeprozeß durch exogenes Ethylen in der die Früchte umgebenden Atmosphäre irreversibel induziert werden. Beispielsweise wird kurz vor dem Verkauf von eingelagerten, unreifen Bananen der Ethylengehalt in der Atmosphäre des Lagerraums um ein Vielfaches erhöht, so daß die Bananen zur vollen Reife gebracht werden.

Niedrige Temperaturen, sogenannter Kältestreß, stimulieren die autokatalytische Ethylenproduktion in klimakterischen Früchten. Das kältestreßinduzierte Ethylen wird auf dem normalen Biosyntheseweg (Yang Cycle) erzeugt, wobei die Umwandlungskapazität von ACC zu C₂H₄ mit sinkender Temperatur zunimmt.

Aus der **EP 0 703 727 B1** ist ein Verfahren zum Transport von leicht verderblichen Waren, insbesondere von frisch geernteten, unreifen Bananen bekannt, bei dem die Bananen zunächst in einem Versand- und Reifungsbehälter eingelagert und darin auf eine Temperatur von 14 bis 15 °C gebracht werden. Um den Reifungsprozeß der Bananen einzuleiten, werden die Bananen bis zu 48 Stunden mit Ethylen begast. Daraufhin wird die Ethylen enthaltende Atmosphäre durch eine kontrollierte Atmosphäre mit einem reduzierten Sauerstoffgehalt von 2 % bis 10 % verdrängt, wobei ein Mindestethylengehalt beibehalten werden soll, der ausreichend ist, um einen kontinuierlichen Reifungsprozeß zu unterstützen. Abschließend werden in dem Behälter wieder normale atmosphärische Bedingungen hergestellt und die Bananen entladen.

Darüber hinaus ist aus der **WO 86/01296** ein Detektor zum Nachweis von Ethylen bei der Lagerung oder dem Transport pflanzlicher Produkte bekannt. Hiermit soll das Erreichen eines Ethylengrenzwertes im Lagerraum festgestellt werden, so daß der Lagerraum durch Einschalten eines Ventilators durchlüftet werden und die Ethylenkonzentration dadurch herabgesetzt werden kann. Damit sollen insbesondere Energiekosten verringert werden, die durch ein ständiges Belüften des Lagerraumes zum dauerhaften Abführen des von den Produkten abgegebenen Ethylens entstehen. Auch soll der Detektor bei der Kontrolle der Konzentration von Ethylen in der Atmosphäre des Lagerraums eingesetzt werden, wenn der Atmosphäre Ethylen zur Beschleunigung des Reifungsprozesses zugesetzt wird.

Bei allen bekannten Verfahren läßt es sich dennoch nicht vermeiden, daß die Pflanzenprodukte teilweise verderben. Dies wird zum einen darauf zurückgeführt, daß die Qualität zum Zeitpunkt der Einlagerung und im Verlauf der Lagerung oder des Transports nicht bekannt ist.

Hiervon ausgehend stellt sich dem Fachmann die Aufgabe, ein Verfahren der eingangs genannten Art zu entwickeln, bei dem frühzeitig Veränderungen im Reifeprozeß der zu transportierenden Produkte erkannt werden und die kontrollierte Atmosphäre entsprechend angepaßt werden kann, um die Frische der Produkte möglichst gut zu erhalten.

Diese Aufgabe wird mit einem Verfahren zur Lagerung von Pflanzenprodukten der eingangs genannten Art gelöst, bei dem
a) die Konzentration mindestens eines Spurengases, das von den Pflanzenprodukten produziert wird und dessen Anteil in der kontrollierten Atmosphäre weniger als 1% beträgt, zu mindestens zwei verschiedenen Zeitpunkten gemessen wird,
b) aus der Folge von mindestens zwei Meßwerten der Grad der Konzentrationsveränderung des Spurengases als Maß für die Produktionsrate des Pflanzenprodukts für dieses Spurengas abgeleitet wird,
c) die Stellwerte für die Zusammensetzung der kontrollierten Atmosphäre in Abhängigkeit vom Grad der Konzentrationsveränderung des Spurengases bestimmt werden und
d) die Zusammensetzung der kontrollierten Atmosphäre entsprechend den Stellwerten eingestellt wird.

Mit der Bestimmung des Grades der Konzentrationsveränderung von Spurengasen kann ein Nachweis über den Reife- bzw. Qualitätszustand der im Lager- bzw. Transportraum befindlichen Pflanzenprodukte geführt werden. Hierbei wird ausgenutzt, daß aufgrund des Stoffwechsels der Pflanzenprodukte neben CO₂ auch andere Spurengase erzeugt werden. Die Änderung der Konzentration dieser Spurengase, deren produzierte Mengen in der Regel äußerst gering sind, kann in der kontrollierten Atmosphäre vergleichsweise leicht nachgewiesen werden, da bereits kleinste Mengen erzeugter Spurengase die Konzentration des jeweiligen Spurengases in der kontrollierten Atmosphäre erheblich erhöhen, ihre Konzentration beträgt meist weniger als 0.01 %. Aus der Produktionsrate solcher Spurengase lassen sich dann Aussagen über den Reifezustand der gelagerten Pflanzenprodukte treffen.

Zur Messung der Gaskonzentrationen werden hochempfindliche Gasnachweissysteme verwendet. Es sind mindestens zwei zeitlich voneinander getrennte Messungen der Konzentration eines Spurengases notwendig, um hierüber eine Konzentrationsveränderung feststellen zu können, wobei die Produktionsrate der Pflanzenprodukte für dieses Spurengas als Ableitung des Konzentrationsverlaufes nach der Zeit bestimmt wird.

Die gemessenen Werte können mit empirisch ermittelten Werten für Produktionsraten von Spurengasen verschiedener Pflanzenprodukte verglichen werden, so daß hieraus eine für den jeweiligen Reifegrad bzw. Zustand der Pflanzenprodukte und die geplante Reise- bzw. Transportzeit optimierte Atmosphärenzusammensetzung eingestellt werden kann.
In Abhängigkeit von dem hieraus bestimmten Reifezustand wird dann eine für die Lagerung vorteilhafte Zusammensetzung der kontrollierten Atmosphäre bestimmt, wobei die Zusammensetzung immer wieder neu an den Zustand der Pflanzenprodukte angepaßt werden kann. Dabei können insbesondere die einzustellenden Konzentrationen von CO₂ und O₂ in der kontrollierten Atmosphäre festgelegt und regelmäßig für den angestrebten Reifezustand der Pflanzenprodukte optimiert werden. Beispielsweise führt insbesondere bei Früchten ein Senken der O₂-Konzentration bei gleichzeitiger Erhöhung des CO₂-Anteils in der Atmosphäre zu einer Verringerung des Stoffumsatzes der Pflanzenprodukte.

Ausgehend von einer voreingestellten kontrollierten Atmosphäre ist es einerseits möglich, als Reaktion auf eine über die Messung festgestellte Änderung des Zustands der Pflanzenprodukte die Zusammensetzung der kontrollierten Atmosphäre an den jeweiligen Reifezustand der gelagerten Pflanzenprodukte anzupassen, indem bei Nachweis eines Grades einer Konzentrationsveränderung eines bestimmten Pflanzenprodukts die eingestellte Konzentration eines oder mehrerer Gasbestandteile der kontrollierten Atmosphäre und/oder Feuchte bzw. Temperatur um ein bestimmtes Maß geändert wird, also die Größe der Änderung der Stellwerte zum Einstellen der kontrollierten Atmosphäre direkt vom Grad der Konzentrationsveränderung eines Spurengases abhängt.

Andererseits kann ein festgestellter Grad der Konzentrationsveränderung eines oder mehrerer Spurengase mit einem vorbekannten Muster, daß in einer Look-Up-Tabelle eines Steuerungsrechners abgespeichert ist, verglichen werden. Stimmen die Konzentrationsänderungsgrade mit einem Muster - zumindest überwiegend - überein, können als Stellwerte zur Einstellung der kontrollierten Atmosphäre solche abgerufen und verwendet werden, die für eben dieses Muster im Steuerungsrechner abgespeichert sind. Solche Sätze von Stellwerten basieren auf empirisch bestimmten, für einen bestimmten Zustand eines Pflanzenprodukts idealen Lagerparametern. Dabei sind die für einen bestimmten Reifezustand idealen Lagerparameter hinsichtlich der Zusammensetzung der kontrollierten Atmosphäre einschließlich der Temperatur- und Feuchtewerte für verschiedene Pflanzenprodukte in der Regel unterschiedlich, wobei sich die idealen Lagerparameter selbst für gleiche Pflanzenprodukten unterschiedlicher regionaler Herkunft oder mit jeweils unterschiedlichem Verlauf der Wachstumsperiode unterscheiden können.

Verfahren zum Einstellen der Zusammensetzung der kontrollierten Atmosphäre bei vorgegebenen Stellwerten sind dem Fachmann ausreichend bekannt und werden hier nicht näher erläutert.

Durch die Überwachung des Reifezustands der Pflanzenprodukte läßt sich ein enormer Nutzen sowohl für das Transportunternehmen, als auch für den Handel mit den zu transportierenden Produkten erzielen. Zum einen können die Energiekosten für die Klimatisierung der Lager-/Transporträume erheblich gesenkt werden, zum anderen kann die Qualität der Produkte aufgrund einer besseren Kontrolle des Reifeprozesses optimiert werden, ein Ausschuß von verfaulten oder überreifen Produkten läßt sich auf ein Minimum reduzieren.

Für die Bestimmung des Zustands der Pflanzenprodukte sind insbesondere Spurengase geeignet, deren Konzentration in der kontrollierten Atmosphäre weniger als 0,01% beträgt.

So ist ein besonders geeigneter Wert zur Bestimmung des Reifegrades der Pflanzenprodukte der Grad der Konzentrationsveränderung der C₂H₄-Konzentration. Der Vorteil einer kontinuierlichen Ethylenüberwachung liegt neben der niedrigen Untergrundkonzentration des Ethylens im Lagerraum auch in der Schlüsselfunktion des Reifehormons Ethylen im Reifeprozeß der Pflanzenprodukte. Insbesondere für klimakterische Früchte ist die Produktionsrate von Ethylen ein signifikanter Parameter für den Reifegrad. Im Preklimakterium produzieren die Früchte nur geringfügige Menge des Pflanzenhormons, wohingegen im Klimakterium sowohl die Respirationsrate als auch die Produktionsrate von Ethylen stark ansteigen und den Reifungsprozeß regeln. Durch einen sehr genauen Nachweis der Ethylenproduktion der Pflanzenprodukte kann somit schnell und effektiv auf sich abzeichnende Reifeprozesse reagiert und die Raumatmosphäre entsprechend geändert werden. Beispiel kann bei einer erhöhten Produktionsrate von Ethylen, die auf einen beschleunigten Reifungsprozeß der gelagerten Pflanzenprodukte hinweist, die O₂-Konzentration in der kontrollierten Atmosphäre zusätzlich gesenkt werden, wenn der Reifungsprozeß der Pflanzenprodukte gehemmt werden soll. Umgekehrt kann für den Fall, daß der Reifungsprozeß der Pflanzenprodukte zum Ende einer Lagerzeit beschleunigt werden soll, und eine vergleichsweise geringe Produktionsrate der Pflanzenprodukte für Ethylen darauf hinweist, daß der Reifungsprozeß noch nicht die gewünschte Geschwindigkeit hat, die O₂-Konzentration und/oder die Ethylenkonzentration in der kontrollierten Atmosphäre weiter angehoben werden.

Während der Lagerung ist man bestrebt, den Stoffumsatz der Pflanzenprodukte zu minimieren, um die Lagerzeit möglichst zu verlängern. Allerdings ist bei hoher CO₂-Konzentration und niedriger O₂-Konzentration in der kontrollierten Atmosphäre der Übergang von oxidativem zu fermentativem Stoffumsatz ein sehr schmaler Grat, der bei Pflanzenprodukten zu nekrotischen Flecken und farblosem Gewebe führen kann. Der Nachweis von C₂H₅OH gestattet hier eine frühzeitige Warnung, um die Lagerparameter zu verändern und damit die Qualität der Früchte zu erhalten. Insofern ist auch die Überwachung des Grades der Konzentrationsveränderung dieses Spurengases von besonderem Vorteil. Wird Ethanol bereits in geringen Konzentrationen nachgewiesen, ist dies ein eindeutiger Nachweis für eine alkoholische Gärung in den gelagerten Pflanzenprodukten. Um die Gärung zu unterbinden, wird die O₂-Konzentration dann in der kontrollierten Atmosphäre angehoben.

Auch die Messung des Ethangehalts in der kontrollierten Atmosphäre kann von erheblichem Vorteil sein. So weist eine ansteigende C₂H₆-Konzentration in der kontrollierten Atmosphäre auf eine irreversible Schädigung des Gewebes der Pflanzenprodukte hin. Bei der Produktion von Ethan handelt sich nämlich nicht um einen Stoffwechselvorgang, sondern einzig und allein um einen Abbauprozeß von organischem Material wie Zellwänden oder Gewebe. Die Ursachen hierfür können sehr unterschiedlich sein, sie können beispielsweise durch tiefe Temperaturen, Radikalreaktionen, Lipidperoxidation oder ähnliches bedingt sein. Wird somit eine Änderung der Ethan-Konzentration in der kontrollierten Atmosphäre nachgewiesen, kann hierauf reagiert werden, indem entweder insbesondere bei einer hohen CO₂-Konzentration in der kontrollierten Atmosphäre diese Konzentration verringert wird, und/oder bei tiefen Lagertemperaturen die Temperatur angehoben wird.

Als weitere Spurengas sind insbesondere Aldehyde, insbesondere Acetaldehyd, zu nennen, dessen Nachweis ebenso wie der Nachweis von Ethanol in der Atmosphäre auf Gärungsprozesse in den Pflanzenprodukten hinweist, mit dem Ergebnis, daß dann die Zusammensetzung der kontrollierten Atmosphäre insbesondere durch Anheben der O₂-Konzentration geändert wird.

Es kann im weiteren von Vorteil sein, den Grad der Veränderung der CO₂-Konzentration in der Atmosphäre zu bestimmen, und zwar immer dann, wenn bei der Lagerung von Pflanzenprodukten auf ein gezieltes Anheben der CO₂-Konzentration in der kontrollierten Atmosphäre verzichtet werden kann. Hierüber erhält man einen Aufschluß über die Respirationsrate der Pflanzenprodukte und somit über ihre Stoffwechslaktivität. Mit dieser Information kann bestimmt werden, ob die Zusammensetzung der kontrollierten Atmosphäre zur Beschleunigung oder Hemmung der Stoffwechselaktivität geändert werden soll.

Ist der Reifegrad des zu lagernden bzw. des eingelagerten Pflanzenproduktes bestimmt, kann hieraus die Zusammensetzung der kontrollierten Atmosphäre geregelt werden, wobei insbesondere die CO₂-Konzentration, die O₂-Konzentration, die Raumtemperatur und/oder die Luftfeuchte geregelt werden.

Soll die CO₂-Konzentration angehoben werden, kann es dabei ausreichen, wenn man sie durch das von den Pflanzenprodukten aufgrund ihres Stoffwechsels produzierte CO₂ auf den gewünschten Stellwert ansteigen läßt. Ebenso kann die relative Luftfeuchtigkeit durch die von den Pflanzenprodukten abgegebene Feuchte angehoben werden.
Es ist möglich, auf diese Weise eine Anpassung der klimatischen Bedingungen im Lager- oder Transportraum in einem Zeitraum von 24 bis 36 Stunden zu erreichen.

Besonders bevorzugt wird die C₂H₁-Konzentration in der Atmosphäre geregelt. So kann in der Atmosphäre enthaltenes Ethylen egal welchen Ursprungs, sei es von den Pflanzenprodukten erzeugtes Streßethylen oder Reifeethylen, oder Ausgasungen anderer Materialien im Lageraum, den Reifeprozeß von klimakterischen Früchten induzieren. Daher ist es von entscheidender Bedeutung, die Konzentration gering zu halten, sofern der Reifungsprozeß gehemmt oder zumindest unterdrückt werden soll, und angehoben werden, wenn der Reifungsprozeß induziert werden soll.

Neben der Regelung der Atmosphäre des gesamten Lagerraums ist es in Kenntnis des jeweiligen Reifegrades der Pflanzenprodukte darüber hinaus möglich, Pflanzenprodukte gleichen Reifegrads im Lager- oder Transportraum in räumlicher Nähe zueinander einzulagern.
Während der Wachstumsperiode der Früchte werden aufgrund der Eigenschaften der Pflanzen bzw. Früchte wie Säuregehalt, Färbung, Zuckergehalt, usw. und entsprechenden Erfahrungswerten ein geeigneter Erntezeitpunkt für eine Plantage bzw. Anbaugebiet ermittelt. Aufgrund von natürlichen Reifeunterschieden zwischen den Pflanzen, aber auch aufgrund bevorzugter Positionen der Früchte innerhalb/an einer Pflanze haben Früchte keinen einheitlichen Reifegrad.
So kann es sein, daß einige Früchte aufgrund ihres Reifegrades bereits eine höhere Ethylenproduktionsrate aufweisen als andere Früchte. Da aber Ethylen grundsätzlich einen Reifeprozeß wesentlich beschleunigen kann, ist es daher beispielsweise erstrebenswert. Ethylen produzierende Früchte von den übrigen zu trennen. So kann eine möglichst lange Lagerung eines Großteils der einzulagernden Früchte ermöglicht und der Ausschuß an verdorbenen bzw. überreifen Früchten bei der Lagerung erheblich verringert werden.

Der mittlere Reifegrad ist hier als gemittelter Reifegrad einer Menge von eingelagerten Pflanzenprodukten zu verstehen, um den der Reifegrad der einzelnen Früchte mehr oder weniger zufällig verstreut liegt. Hierdurch ergibt sich eine bestimmte Reifeverteilung der eingelagerten Früchte, die je nach Streuung eine bestimmte Breite besitzt. Für jeden Reifegrad gibt es prinzipiell einen idealen Satz an Lagerparametern, der die Lagerqualität der Früchte optimal aufrechterhält. Nah benachbarte Reifegrade haben geringfügig verschiedene optimale Lagerparameter, so daß der Stoffwechsel hei gleichen Umgebungsverhältnissen in ähnlicher Weise positiv beeinflußbar ist. Je breiter die Reifeverteilung ist, desto mehr Früchte werden unter nicht optimalen Lagerbedingungen gelagert.
Daher ist es von Vorteil, wenn der individuelle Reifegrad einzelner Pflanzenprodukte oder ein mittlerer Reifegrad von Teilen der Beladung im Lagerraum kontinuierlich oder intermittierend bestimmt wird. Damit ist es möglich, die Atmosphäre in verschiedenen Bereichen des Lagerraumes an den Zustand der dort gelagerten Pflanzenprodukte anzupassen, wodurch eine über den Lagerraum verteilte uneinheitliche Atmosphärenzusammensetzung entstehen kann.

Auch können aufgrund der Kenntnis des mittleren Reifegrades einer Teilmenge der eingelagerten Pflanzenprodukte oder der Kenntnis des Reifegrades jeweils einzelner eingelagerter Pflanzenprodukte diese gemäß ihrem Reifegrad während der Lagerung sortiert werden.
Hier kommt beispielsweise eine Sortierung von Früchten nach ihrer Ethylenproduktionsrate in Betracht. Es wird damit eine Einengung der mittleren Reifeverteilung erreicht, die eine optimierte Anpassung der Klimaparameter in dem jeweiligen Raumabschnitt ermöglicht.

Insbesondere kann eine Sortierung der Pflanzenprodukte in Form einer Verteilung auf verschiedene Kammern bzw. Lagerräume mit für den jeweiligen Reifezustand optimaler Atmosphäre erfolgen. In diesem Fall gibt es eine Vielzahl von geschlossenen Räumen mit unterschiedlichen Lageratmosphären, und jedes Pflanzenprodukt wird in die Kammer mit der für den geplanten Reifeprozeß während der Lagerung günstigsten Atmosphärenzusammensetzung eingelagert. In diesem Fall können die klimatischen Bedingungen innerhalb eines Lageraums konstant gehalten werden.

Ein besonders geeignetes Verfahren zum Nachweis von Spurengasen in der Lagerraumatmosphäre ist ein auf dem photoakustischen Effekt basierendes Gasanalyseverfahren. Hierunter fällt zum einen ein photoakustischer Nachweis, bei dem eine Schallwelle, die durch eine periodische Erwärmung des Gasgemisches erzeugt wird, mittels eines Mikrophons aufgenommen und ausgewertet wird. Hierunter fällt aber auch die sogenannte photo thermal deflection method, bei der die Änderung des Brechungsindex des Gasgemisches aufgrund einer periodischen Erwärmung mit einer positionsempfindlichen Diode und einem sichtbaren Laserstrahl bestimmt wird.
Für das Verfahren geeignete photoakustische Sensoren sind in
1) T.Fink et al., An improved CO₂ laser intracavity photoacoustic spectrometer for trace gas analysis, Review of scientific instruments, Vol. 67, No.11, Nov. 1996, pp 4000-4004, und
2) F. Harren et al., Sensitive intracavity photoacoustic measurements with a CO₂ waveguide laser, Appl. Phys. B 50, 137 (1990).

Mit diesen Verfahren können beispielsweise geringste Mengen an Ethylen bis zu einer Größenordnung von 100 ppt (parts per trillion) in der Atmosphäre eines Lager- oder Transportraums nachgewiesen werden. Somit ist es möglich, bereits kleinste Schwankungen des Ethylengehalts in der Atmosphäre zu registrieren und damit Änderungen im Reifeprozeß der gelagerten oder transportierten Produkte sehr früh zu erkennen.
Mit dieser hohen Nachweisempfindlichkeit können Änderungen der Ethylenproduktionsrate der Pflanzenprodukte zu einem Zeitpunkt nachgewiesen werden, an dem die vorhandenen Ethylenkonzentrationen in dem Lagerraum noch keine physiologische Wirkung auf die Früchte ausüben, so daß frühzeitig durch eine Änderung der Atmosphärenzusammensetzung auf Änderungen im Reifeprozeß reagiert werden kann. Dabei ermöglicht die Kenntnis des "kompletten" Datensatzes einer normal verlaufenden Reifung sowohl eine Identifizierung des auslösenden Momentes für die Änderungen des Stoffwechsels als auch eine Vorhersage des weiteren Verlaufs der beginnenden Stoffwechselvorgänge, so daß dieser behoben werden kann, bevor z.B. autokatalytische Prozesse ausgelöst werden.

Auch kann mit dem photoakustischen Meßverfahren schon ab dem Zeitpunkt der Einlagerung der Pflanzenprodukte eine Sortierung nach ihrem Reifegrad durchgeführt werden. Die hohe Empfindlichkeit des Sensors verspricht selbst bei der Untersuchung einzelner Früchte einen wirtschaftlich hohen Fruchtdurchsatz.

Wie sich anhand der im folgenden aufgezeigten Beispiele des Verlaufes der Ethylenproduktionsrate bei Bananen erkennen läßt, ist ihre Kenntnis für eine optimale Lagerung vonnöten.

Bild 1 zeigt den zeitlichen Verlauf der Ethylenproduktionsrate von Bananen mit gleichem Reifegrade, aber unterschiedlicher Vorbehandlung. Die Bananen von Händler 1 sind derart durch Ethyleninduktion vorbehandelt, daß sie nach 9 bis 11 Tagen zum Verkauf bereit sind. Bei den Bananen von Händler 2 ist der Reifevorgang durch exogenes Ethylen so stark induziert, daß die Früchte innerhalb von ca. 3 bis 6 Tagen ausreifen.

Die Bananen von Händler 1 erreichen eine maximale Produktionsrate von ca. 11 pmol/(h*g) nach knapp 3 Stunden nach erfolgter Einlagerung. Es ist auf eine Anpassung der Früchte an die neuen Umgebungsbedingungen zurückzuführen (definierter Luftstrom von 2 l/h, hohe relative Luftfeuchtigkeit von 95 % bei 20°C und einer O₂-Konzentration von 19 % und einer CO₂-Konzentration von 400 ppm). 6 Stunden nach Einlagerung erreicht die Produktionsrate dann ein relatives Minimum von ca. 4 pmol/(h*g) und steigt im weiteren Verlauf zeitlichen Verlauf langsam und stetig an. Dieser stetige Anstieg der Produktionsrate ist auf den ablaufenden Reifungsprozeß zurückzuführen.
Bei den Bananen von Händler 2 wird eine maximale Produktionsrate von ca. 10 pmol/(h*g) nach ca. 2 Stunden nach erfolgter Einlagerung beobachtet. Es ist ebenso auf eine Anpassung der Früchte an die neuen Umgebungsbedingungen zurückzuführen (definierter Luftstrom von 2 l/h, hohe relative Luftfeuchtigkeit von 95 % bei 20°C und einer O₂-Konzentration von 19 % und einer CO₂-Konzentration von 400 ppm). Das zweite Maximum bei den Bananen von Händler 2 nach ca. 9 Stunden mit einer Produktionsrate von ca. 9 pmol/(h*g) deutet auf andere in der Frucht ablaufende Prozesse hin. Erst 15 Stunden nach Einlagerung erreicht die Produktionsrate dann ein relatives Minimum von ca. 7 pmol/(h*g) und steigt im weiteren Verlauf zeitlichen Verlauf langsam wieder an.

Dieser stetige Anstieg der Produktionsrate ist wiederum auf den ablaufenden Reifungsprozeß zurückzuführen.

Bild 2 zeigt den Verlauf der Ethylenproduktionsrate von Bananen verschiedenen Reifegrades, und zwar zum einen gelbe, sehr reife Bananen, und zum anderen grüne, unreife Bananen. Sie werden gelagert bei reduzierter Lagertemperatur 7 °C, die übrigen Lagerparameter entsprechen den bezüglich Bild 1 genannten Parametern.

Es läßt sich sowohl für die reifen als auch für die unreifen Bananen ein verbreiterter Adaptionspeak beobachten, der erst nach ca. 6 Stunden ein Maximum der Produktion erreicht. Das Maximum bei den unreifen Bananen liegt bei ca. 100 pmol/(h*g), bei den reifen Bananen bei ca. 25 pmol/(h*g). Die Breite des Adaptionspeaks kann auf eine verringerte Enzymaktivität bei den niedrigeren Temperaturen zurückgeführt werden.

Diesen Messungen kann entnommen werden, wie stark die Früchte (in diesem Fall Bananen) mit einer Erhöhung der Ethylenproduktion auf veränderte Umgebungsbedingungen reagieren bzw. daß es bis zu 6 h dauert, bis der Adaptionspeak wieder abgeklungen ist. Daher sollte die Messung der Ethylenproduktionsrate nach Erreichen eines neuen Gleichgewichtswertes und vor allen Dingen unter vergleichbaren Bedingungen durchgeführt werden, wenn die Ethylenemission aufgrund der mechanischen Belastung und Behandlung zurückgegangen ist. Somit ergibt sich beispielsweise für eine Lagerung von Früchten in einen Lagerraum mit einer Sortierung der Früchte nach ihrem Reifegrad folgender Ablauf:
a) übliche Behandlung der Früchte (waschen, sortieren nach Größe o.Ä.) und Zwischenlagerung;
b) Einstellen bekannter Erfahrungswerte für eine kontrollierte Atmosphäre im Lagerraum;
c) nachdem die Früchte ihre durch die Adaption an die neue Umgebung bzw. durch mechanischen Streß oder Verletzungen bedingte erhöhte Ethylenproduktion wieder zurückgegangen ist, können die Lagerparameter an den Reifegrad der im Lagerraum befindlichen Produkte angepaßt werden; oder es kann mit einem Sensor die Ethylenproduktionsrate für einzelne Früchte oder Stauden bestimmt werden und entsprechend ihrer spezifischen Produktionsrate auf Räume/Container mit jeweils idealen Lagerparametern verteilt werden.

Sofern die Früchte nach Abklingen des Behandlungsstresses weiterhin im gleichen Lagerraum gelagert werden, sollte auf jeden Fall die Luft in den Lagerräumen/Containem gegen ethylenfreie Luft austauschen, um keine Effekte (Induktion von Reifung) durch eine Erhöhung der Ethylenkonzentration zu erhalten.

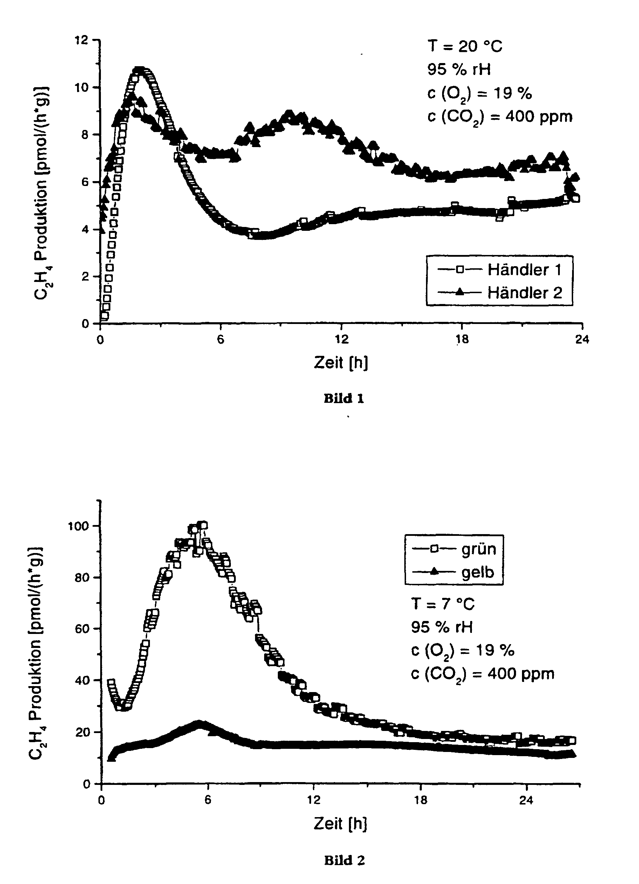

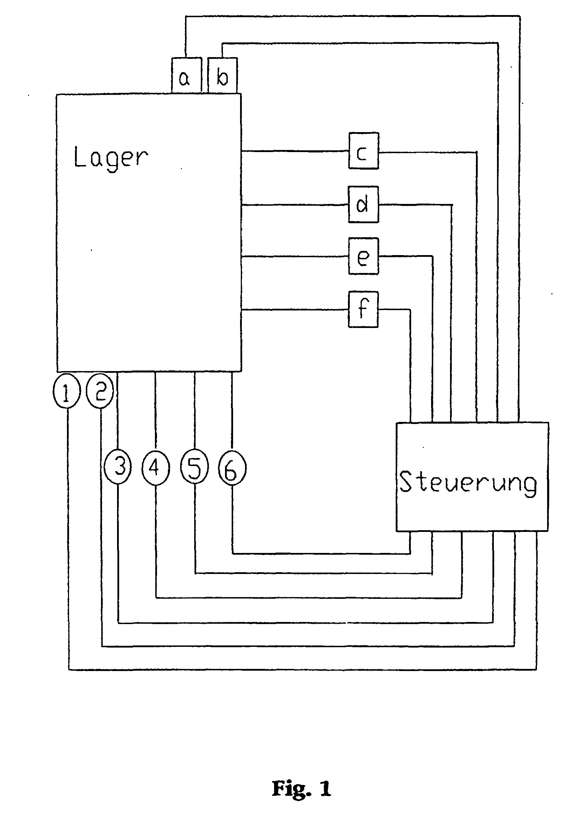

Im folgenden wird die Erfindung anhand zweier Figuren näher erläutert. Figur 1 zeigt ein Regelungssystem für einen Lagerraum, bei dem das Lagerraumklima über Sensoren für Temperatur **1**, Luftfeuchtigkeit **2**, Sauerstoffkonzentration **3**, Kohlendioxidkonzentration **4**, die Konzentration von Ethylen **5** und die Konzentration weiterer Gase wie Ethan, Ethanol oder Acetaldehyd gemessen werden und in einem Steuerungsmodul aufbereitet werden. Aus den Meßdaten werden optimierte Klimaparameter bestimmt und über die Regler **a, b** zur Temperatur- und Feuchtesteuerung, sowie die Regler **c, d, e** für die Sauerstoff-, Stickstoff- und Kohlendioxidkonzentration und **f** für die Konzentration weiterer Gase in der Atmosphäre des Lagerraums eingestellt.

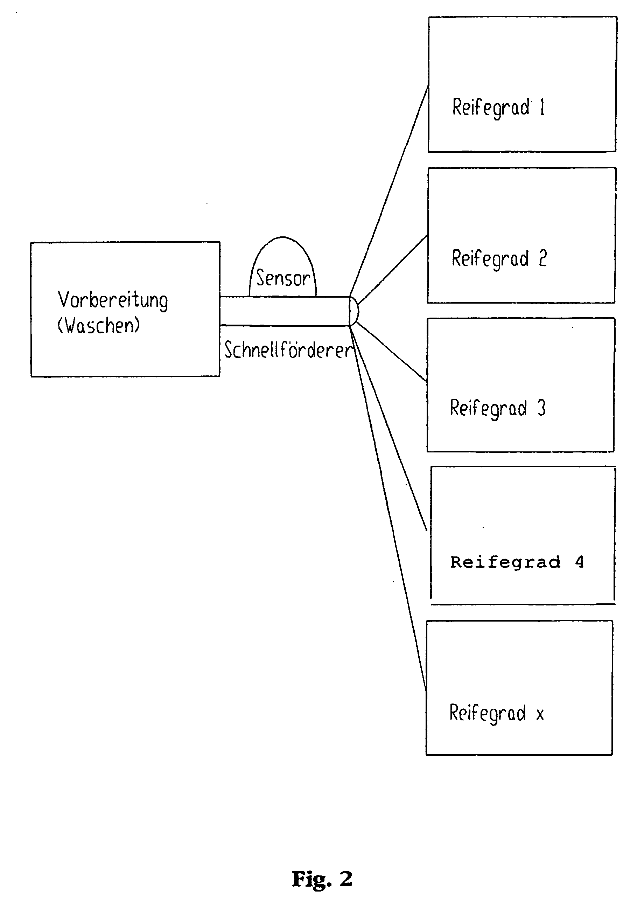

Figur 2 zeigt ein Verfahrensschema zur Einlagerung von Pflanzenprodukten unterschiedlichen Reifegrades, bei dem die Pflanzenprodukte in einem ersten Schritt für die Lagerung vorbereitet werden. Die Vorbereitung kann beispielsweise in einem einfachen Waschen der Pflanzenprodukte bestehen, es kann aber auch eine klimatische Vorbehandlung, beispielsweise eine Behandlung mit exogenem Ethylen, erfolgen. Danach wird der Reifegrad einzelner Pflanzenprodukte bestimmt und entsprechend dem Reifegrad über einen Schnellförderer in eine Kammer mit den für diesen Reifegrad optimalen Klimabedingungen einsortiert.

## Patentansprüche

1. Verfahren zur Regelung einer kontrollierten Atmosphäre für die Lagerung von Pflanzenprodukten in mindestens einem Lager- oder Transportraum, bei dem
a) die Konzentration mindestens eines Spurengases, das von den Pflanzenprodukten produziert wird und dessen Anteil in der kontrollierten Atmosphäre weniger als 1% beträgt, zu mindestens zwei verschiedenen Zeitpunkten gemessen wird,
b) aus der Folge von mindestens zwei Meßwerten der Grad der Konzentrationsveränderung des Spurengases als Maß für die Produktionsrate des Pflanzenprodukts für dieses Spurengas abgeleitet wird,
c) die Stellwerte für die Zusammensetzung der kontrollierten Atmosphäre in Abhängigkeit vom Grad der Konzentrationsveränderung des Spurengases bestimmt werden und
d) die Zusammensetzung der kontrollierten Atmosphäre entsprechend den Stellwerten eingestellt wird.

2. Verfahren nach Anspruch 1, **dadurch gekennzeichnet, daß** der Grad der Konzentrationsveränderung der C₂H₄-Konzentration bestimmt wird.

3. Verfahren nach Anspruch 1 oder 2, **dadurch gekennzeichnet, daß** der Grad der Konzentrationsveränderung der C₂H₅OH-Konzentration bestimmt wird.

4. Verfahren nach einem der vorstehenden Ansprüche, **dadurch gekennzeichnet, daß** der Grad der Konzentrationsveränderung der C₂H₆-Konzentration bestimmt wird.

5. Verfahren nach einem der vorstehenden Ansprüche, **dadurch gekennzeichnet, daß** der Grad der Konzentrationsveränderung eines Aldehyds, insbesondere der von Acetaldehyd, bestimmt wird.

6. Verfahren nach einem der vorstehenden Ansprüche, **dadurch gekennzeichnet, daß** in der kontrollierten Atmosphäre die CO₂-Konzentration nicht künstlich angehoben und der Grad der Konzentrationsveränderung der CO₂-Konzentration bestimmt wird.

7. Verfahren nach einem der vorstehenden Ansprüche, **dadurch gekennzeichnet, daß** die CO₂-Konzentration, die O₂Konzentration, die Raumtemperatur und/oder die Luftfeuchte geregelt werden.

8. Verfahren nach einem der vorstehenden Ansprüche, **dadurch gekennzeichnet, daß** die C₂H₄-Konzentration in der kontrollierten Atmosphäre geregelt wird.

9. Verfahren nach einem der vorstehenden Ansprüche, **dadurch gekennzeichnet, daß** Pflanzenprodukte gleichen Reifegrads in räumlicher Nähe zueinander eingelagert werden.

10. Verfahren nach Anspruch 9, **dadurch gekennzeichnet, daß** kontinuierlich oder intermittierend der individuelle Reifegrad einzelner Pflanzenprodukte oder ein mittlerer Reifegrad von Teilen der Beladung im Lagerraum bestimmt wird.

11. Verfahren nach Anspruch 9 oder 10, **dadurch gekennzeichnet, daß** die Produkte gemäß ihrem Reifegrad während der Lagerung sortiert werden.

12. Verfahren nach einem der Ansprüche 9 bis 11, **dadurch gekennzeichnet, daß** die Pflanzenprodukte gleichen Reifegrads jeweils auf Kammern bzw. Lagerräume mit einer für sie optimalen Atmosphäre verteilt werden.

13. Verfahren nach einem der vorstehenden Ansprüche, **dadurch gekennzeichnet, daß** ein auf dem photoakustischen Effekt basierendes Gasanalyseverfahren zur Bestimmung des Grades der Konzentrationsveränderung von Spurengasen verwendet wird.

14. Verwendung eines photoakustischen Sensors in einem Verfahren gemäß der Ansprüche 1 - 13 zur Bestimmung des Reifegrades von Pflanzenprodukten.

## Claims

1. A process for regulating a controlled atmosphere for the storage of plant products in at least one storage or transport room, in which
a) the concentration of at least one trace gas which is produced by the plant products and whereof the proportion in the controlled atmosphere is less than 1 % is measured at at least two different points in time,
b) based on at least two measured values, the degree of change in concentration of the trace gas is used to deduce the production rate of this trace gas by the plant product,
c) the variables for the composition of the controlled atmosphere as a function of the degree of change in concentration of the trace gas are determined, and
d) the composition of the controlled atmosphere is adjusted in dependence on the variables.

2. A process according to Claim 1, **characterised in that** the degree of change in concentration is determined for the concentration of C₂H₄.

3. A process according to Claim 1 or 2, **characterised in that** the degree of change in concentration is determined for the concentration of C₂H₅OH.

4. A process according to one of the preceding claims, **characterised in that** the degree of change in concentration is determined for the concentration of C₂H₆.

5. A process according to one of the preceding claims, **characterised in that** the degree of change in concentration is determined for an aldehyde, in particular for acetaldehyde.

6. A process according to one of the preceding claims, **characterised in that** the concentration of CO₂ is not raised artificially in the controlled atmosphere and the degree of change in concentration is determined for the concentration of CO₂.

7. A process according to one of the preceding claims, **characterised in that** the concentration of CO₂, the concentration of O₂, the room temperature and/or the relative humidity are regulated.

8. A process according to one of the preceding claims, **characterised in that** the concentration of C₂H₄ in the controlled atmosphere is regulated.

9. A process according to one of the preceding claims, **characterised in that** plant products having the same degree of ripeness are stored in spatial proximity to one another.

10. A process according to Claim 9, **characterised in that** the individual degree of ripeness of individual plant products or an average degree of ripeness of some of the goods in the storage room is determined continuously or intermittently.

11. A process according to Claim 9 or 10, **characterised in that** the products are sorted during storage in dependence on their degree of ripeness.

12. A process according to one of Claims 9 to 11, **characterised in that** the plant products having the same degree of ripeness are distributed in chambers or storage rooms having the respectively optimum atmosphere for them.

13. A process according to one of the preceding claims, **characterised in that** a gas analysis method based on the photoacoustic effect is used to determine the degree of change in concentration of trace gases.

14. The use of a photoacoustic sensor in a process according to Claims 1 - 13 to determine the degree of ripeness of plant products.

## Revendications

1. Procédé de régulation d'une atmosphère contrôlée pour le stockage de produits végétaux dans au moins un espace de stockage ou de transport, dans lequel :
a) la concentration d'au moins un gaz présent à l'état de traces qui est produit par les produits végétaux et dont la fraction dans l'atmosphère contrôlée est inférieure à 1 %, est mesurée en au moins deux moments différents,
b) à partir du résultat d'au moins deux valeurs de mesure, on déduit le degré de modification de la concentration du gaz présent à l'état de traces en tant que mesure du taux de production du produit végétal de ce gaz présent à l'état de traces,
c) les valeurs de réglage pour la composition de l'atmosphère contrôlée sont déterminées en fonction du degré de la modification de concentration du gaz présent à l'état de traces, et
d) la composition de l'atmosphère contrôlée est ajustée en fonction des valeurs de réglage.

2. Procédé selon la revendication 1, **caractérisé en ce que** l'on détermine le degré de modification de la concentration en C₂H₄.

3. Procédé selon la revendication 1 ou 2, **caractérisé en ce que** l'on détermine le degré de modification de la concentration en C₂H₅OH.

4. Procédé selon l'une des revendications précédentes, **caractérisé en ce que** l'on détermine le degré de modification de la concentration en C₂H₆.

5. Procédé selon l'une des revendications précédentes, **caractérisé en ce que** l'on détermine le degré de modification de la concentration d'un aldéhyde, en particulier celui de l'acétaldéhyde.

6. Procédé selon l'une des revendications précédentes, **caractérisé en ce que** dans l'atmosphère contrôlée, on n'élève pas la concentration en CO₂ de façon artificielle, et on détermine le degré de modification de la concentration en CO₂.

7. Procédé selon l'une des revendications précédentes, **caractérisé en ce que** l'on régule la concentration en CO₂, la concentration en O₂, la température ambiante et/ou l'humidité de l'air.

8. Procédé selon l'une des revendications précédentes, **caractérisé en ce que** l'on régule la concentration en C₂H₄ dans l'atmosphère contrôlée.

9. Procédé selon l'une des revendications précédentes, **caractérisé en ce que** l'on stocke des produits végétaux de même degré de maturation à proximité spatiale les uns des autres.

10. Procédé selon la revendication 9, **caractérisé en ce que** l'on détermine en continu ou de façon intermittente le degré de maturation individuel des différents produits végétaux ou un degré de maturation moyen de parties du chargement dans l'espace de stockage.

11. Procédé selon la revendication 9 ou 10, **caractérisé en ce que** les produits sont triés selon leur degré de maturation pendant le stockage.

12. Procédé selon l'une des revendications 9 à 11, **caractérisé en ce que** les produits végétaux de degré de maturation identique sont répartis respectivement sur des chambres ou des espaces de stockage présentant une atmosphère optimale pour eux.

13. Procédé selon l'une des revendications précédentes, **caractérisé en ce que** l'on utilise un procédé d'analyse de gaz basé sur un effet photo-acoustique pour déterminer le degré de modification de la concentration des gaz présents à l'état de traces.

14. Utilisation d'un détecteur photo-acoustique dans un procédé selon les revendications 1 à 13 pour déterminer le degré de maturation de produits végétaux.
